Europäisches Patentamt

European Patent Office

Office européen des brevets

(11) Veröffentlichungsnummer: **0 058 352**
**B1**

(12) **EUROPÄISCHE PATENTSCHRIFT**

(45) Veröffentlichungstag der Patentschrift:
**22.06.88**

(21) Anmeldenummer: **82100812.5**

(22) Anmeldetag: **04.02.82**

(51) Int. Cl.⁴: **H 02 K  57/00,** H 02 K  17/16,
**H 02 K 3/51**

(54) **Wicklung für einen elektrischen Motor insbesondere für einen Waschautomaten.**

(30) Priorität: **13.02.81  DE 3105300**

(43) Veröffentlichungstag der Anmeldung:
**25.08.82 Patentblatt 82/34**

(45) Bekanntmachung des Hinweises auf die Patenterteilung:
**22.06.88 Patentblatt 88/25**

(84) Benannte Vertragsstaaten:
**AT BE CH DE FR GB IT LI NL SE**

(56) Entgegenhaltungen:
**DE - A - 2 643 904**
**DE - C - 276 610**
**FR - A - 2 247 842**
**US - A - 1 803 493**

(73) Patentinhaber: **Siemens Aktiengesellschaft Berlin und München, Wittelsbacherplatz 2, D-8000 München 2 (DE)**

(72) Erfinder: **Bradier, Peter, Dipl.-Ing., Fritz-Erler-Strasse 4, D-8700 Würzburg (DE)**
Erfinder: **Paur, Horst, Am Dicken Turm 1A, D-8700 Würzburg (DE)**
Erfinder: **Fischer, Hans, Flürleinstrasse 18, D-8700 Würzburg (DE)**

## Beschreibung

Die Erfindung bezieht sich auf eine Wicklung für einen elektrischen Motor, insbesondere für einen Waschautomaten, der im Oberbegriff des Patentanspruchs 1 angegebenen Art. Ein derartiger Motor ist aus der DE-B-2 744 472 bekannt. Er wird durch wechselweise Zuschaltung der entsprechenden Anschlüsse an das Wechselstromnetz abwechselnd als Induktionsmotor und als Einphasenreihenschlussmotor (Universalmotor) betrieben.

Der bekannte Motor zeichnet sich, insbesondere im Einsatz bei Waschautomaten mit hohen Schleuder-Enddrehzahlen, durch seine kompakte Bauart und grosse Drehzahlspreizung ohne Notwendigkeit der Zwischenschaltung eines Untersetzungsgetriebes aus. Die im bekannten Fall gegebene Möglichekit, zur Vermeidung magnetischer Geräusche günstige Nutzahlverhältnisse weitgehend frei wählen zu können, wird durch eine Wicklungsauslegung erkauft, die in der Fertigung und beim Blockierschutz der Wicklung zu Schwierigkeiten führen kann. Da im bekannten Fall sowohl eine erste ungekreuzte als auch eine zweite gekreuzte Schleifentwicklung an die gleichen Lamellen des Kommutators anzuschliessen ist und dieses integrierte Läuferentwicklungssystem sowohl für den Induktionsmotor-Betrieb als auch für den Universalmotor-Betrieb eingesetzt wird, ergeben sich Auslegungsrückwirkungen zwischen dem zweipoligen Universalmotor-Betrieb und dem höherpoligen Induktionsmotor-Betrieb. Gleichzeitig sind besondere Konstruktionsausführungen des Kommutators und insbesondere der Kommutatorhaken sowie Fertigungsvorrichtungen notwendig, um jeweils zwei Wicklungsdrähte mit nur einem Kommutatorhaken sicher kontaktieren zu können.

Durch die DE-B-2 530 294 ist zwar ein Motor mit einer an die Lamellen eines Kommutators angeschlossenen zweipoligen Schleifenwicklung einerseits und einer davon galvanisch völlig getrennten und somit zum Haken des Kommutators verbindungslosen Induktionsmotor-Wicklung bekannt, jedoch ist die dort vorgesehene Läufernutzahl nach der üblichen, aufgrund von Polzahl, Phasenzahl und Nutenzahl pro Pol und Strang nach der Formel $N_2 = 2p \cdot m_2 \cdot q_2$ bestimmten Nutzahl festgelegt, so dass insbesondere bei höherpoligen Motoren magnetische Geräuschprobleme wegen der beschränkten Möglichkeit frei wählbarer Nutzahlverhältnisse nur schwer zu beherrschen sind.

Aufgabe der vorliegenden Erfindung ist es daher, eine Wicklung für einen elektrischen Motor der im ersten Teil des Anspruches 1 genannten Art zu schaffen, die einerseits einfach herstellbar ist, insbesondere unter Vermeidung von durch mehrere Wicklungsdrähte zu belegenden Kommutatorhaken, und gleichzeitig durch weitgehend freie Wahl der Nutzahlverhältnisse eine günstige Voraussetzung für geringe magnetische Geräusche liefert.

Diese Aufgabe wird durch die im kennzeichnenden Teil des Patentanspruchs 1 angegebenen Massnahmen gelöst. Obwohl somit die Läufernutzahl weitgehend frei wählbar ist, kann die Induktionsmotor-Wicklung im Läufer als getrennte Wicklung ohne Kontaktierung zum Kommutator ausgeführt und gleichzeitig erreicht werden, dass sich bei Erregung der zweipoligen Ständerwicklung im Universalmotor-Betrieb die induzierten Spannungen in jedem Spulenpaar zu Null ergänzen und somit im Universalmotor-Betrieb keine asynchronen Drehmomente entstehen, die sich insbesondere bei übersynchroner Drehzahl als Bremsmomente störend auswirken können.

Die erfindungsgemässe Wicklung erlaubt eine individuelle Auslegung beider Läuferwicklungen im Hinblick auf ein gutes Betriebsverhalten speziell im Induktionsmotor-Waschbetrieb einerseits bzw. im Universalmotor-Schleuderbetrieb andererseits bei gleichzeitig auf einfache Weise zu gewährleistendem Blockierschutz. Bei der Wahl der Nutzahlverhältnisse sind lediglich die bekannten ungünstigen Nutzahlkombinationen zwischen Ständernutzahl und Läufernutzahl zu vermeiden. Um ein sicheres Anlaufverhalten in jedem Fall zu gewährleisten, sollten zumindest zwei Spulenpaare mit zu zwei Kurzschlusskreisen in Reihe geschalteten Spulen vorgesehen werden.

Die erfindungsgemässe Wicklung lässt sich besonders einfach fertigen. An sich würde man wohl zunächst jede Spulengruppe mit ihren in Reihe geschalteten Spulen je für sich wickeln und die zwei freien Wicklungsenden, nämlich den Wicklungsanfang und das Wicklungsende einer Reihenschaltung, anschliessend je für sich in richtiger Weise miteinander verbinden; je grösser die Spulen- bzw. die Spulengruppenzahl ist, erfordert diese Verbindung eine desto aufwendigere Einzelhandhabung. Die Wicklungsherstellung kann dadurch vereinfacht werden, dass sämtliche Verbindungspunkte zwischen je einem Wicklungsanfang und einem Wicklungsende einer jeden Reihenschaltung der nacheinander von einer Wickelvorrichtung zu wickelnden Spulengruppen durch einen elektrischen Kurzschliesser verbunden sind. Ein für diese Zwecke besonders geeigneter Kurzschliesser ist Gegenstand der prioritätsgleichen europäischen Patentanmeldung 82 100 810.9 (EP-A-58 351).

Die gemäss der Lehre der Ansprüche 2 und 3 bzw. 5 und 6 hergestellten Wicklungen stellen einen Kompromiss dar zwischen minimalem Wicklungs- insbesondere Kupferaufwand einerseits und hinreichendem Betriebsverhalten andererseits. Das beste Betriebsverhalten wird bei einem Motor erreicht, bei dem sämtliche Nuten gleichartig mit mehreren Spulenseiten pro Nut belegt sind; im Fall eines Motors mit achtpoliger Induktionsmotor-Wicklung und achtzehn Nuten im Läufer sind dabei zweckmässigerweise jeweils zwei Spulenseiten pro Nut vorgesehen.

Die Erfindung sowie weitere vorteilhafte Ausgestaltungen werden im folgenden anhand schematisch dargestellter Ausführungsbeispiele in der Zeichnung näher erläutert. Darin zeigen:

Fig. 1 die Prinzipschaltung für einen Waschautomatenantrieb mit einem dreisträngigen, achtpoligen Induktionsmotorteil und einem jeweils im gleichen Blechpaket angeordneten zweipoligen Universalmotorteil im Ständer,

Fig. 2 das Wicklungsschema des in den vierundzwanzig Nuten des Ständerblechpaketes untergebrachten zwölfpoligen, dreisträngigen Induktionsmotorteils,

Fig. 3 das Wicklungsschema der in den vierundzwanzig Nuten des Ständerblechpaketes untergebrachten Erregerwicklungen des Universalmotorteils,

Fig. 4 bis 6 drei Ausführungsbeispiel der in den achtzehn Nuten des Läuferblechpakets untergebrachten erfindungsgemäss ausgebildeten Induktionsmotor-Läuferwicklung,

Fig. 7 das Wicklungsschema der in den achtzehn Nuten des Läuferblechpaketes untergebrachten zweipoligen Universalmotor-Läuferwicklung,

Fig. 8 das Wicklungs- und Anschlussschema einer an neun Schaltring-Haken eines Schaltrings angeschlossenen achtpoligen, in achtzehn Nuten des Läuferblechpaketes untergebrachten Induktionsmotor-Läuferwicklung mit insgesamt neun Spulenpaaren mit je einer Reihenschaltung aus zwei Spulen,

Fig. 9, 10 jeweils einen Längsschnitt durch zwei verschiedene Ausführungen des vor einem Wikkelkopf des Läufers in einer teilbaren Kassette gekapselt gehaltenen Schaltrings,

Fig. 11 eine Draufsicht auf einen Schaltring, gemäss Fig. 9, 10,

Fig. 12 bis 16 im Querschnitt jeweils verschiedene Formen von Schaltring-Haken.

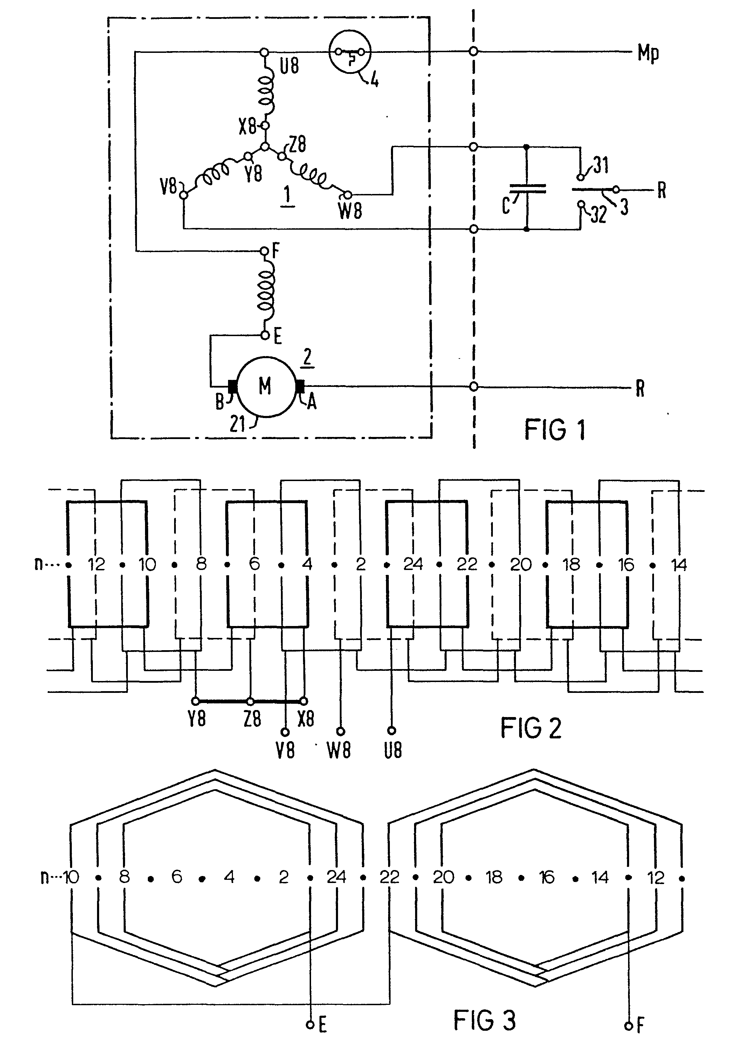

Fig. 1 zeigt strickpunktiert umrandet den integrierten Induktions- und Universalmotor eines Waschautomaten, der in beiden Betriebsarten jeweils aus einem Einphasen-Wechselstromnetz R,$M_p$ gespeist wird. Die drei Stränge der in Stern geschalteten Ständerwicklung des Induktionsmotors 1 sind mit U8, X8, V8, Y8, W8, Z8 bezeichnet. Die Erregerwicklung des aus dem Einphasen-Wechselstromnetz R,$M_p$ gespeisten Reihenschluss-Universalmotors 2 trägt die Bezugszeichen EF, die Bürsten des zugehörigen Läufers 21 sind wie üblich mit BA bezeichnet. Parallel zu den Eingängen V8 bzw. W8 liegen die beiden Klemmen 31 bzw. 32 eines für den Waschbetrieb vorgesehenen Reversierschalters 3, dessen Eingangsklemme mit dem Pol R des speisenden Einphasen-Wechselstromnetzes R,$M_p$ verbunden ist. Parallel zu den Klemmen 31, 32 liegt ein Kondensator c. Der zweite Pol $M_p$ des speisenden Einphasen-Wechselstromnetzes R,$M_p$ ist in Reihe mit einem Thermowächter an den Eingang des Stranges U8 des Induktionsmotors 1 angeschlossen, der z.B. in achtpoliger Ausführung unter Zwischenschaltung einer entsprechenden Riemenübersetzung die Waschtrommel eines Waschautomaten im Waschbetrieb mit etwa 50 Trommel-Upm antreibt. Der Induktionsmotor 1 kann anstelle der hier gezeigten drei Stränge auch mit nur zwei Strängen ausgeführt sein. Die Polzahl des Reihenschluss-Universalmotors 2 soll beispielsweise gleich zwei sein, soll jedoch eine von der Polzahl des Induktionsmotors 1 unterschiedliche Grösse aufweisen.

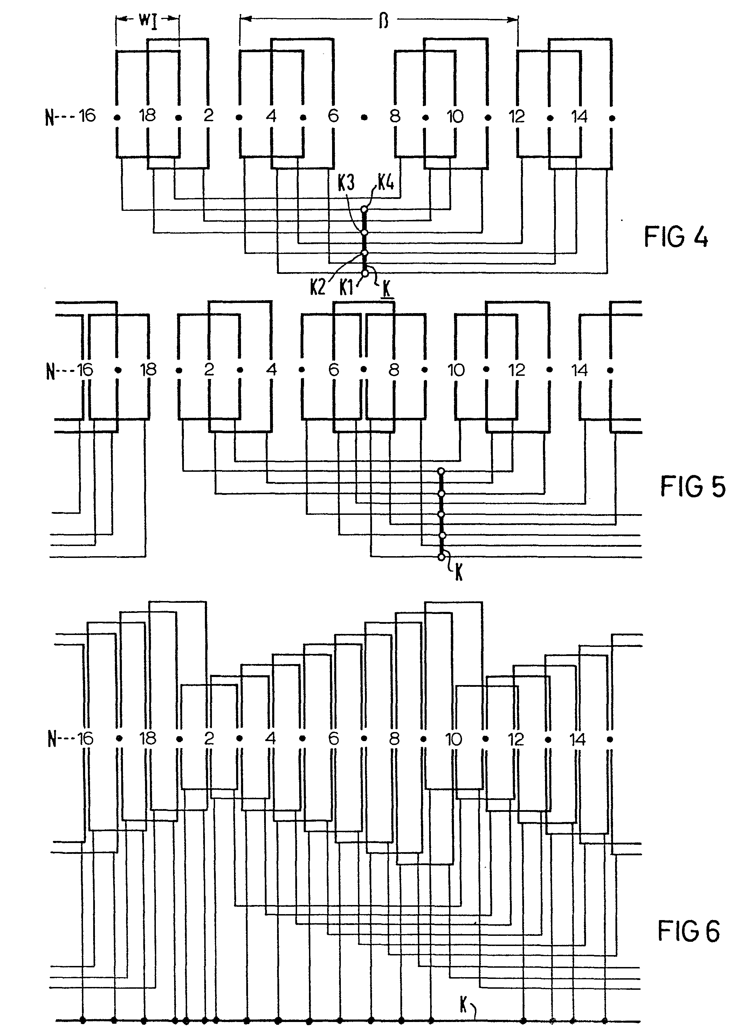

Fig. 2 zeigt das Wicklungsschema der in Fig. 1 in einer Prinzipschaltung dargestellten Ständerwicklung eines achtpoligen. dreisträngigen Induktionsmotorteils, der sämtliche Nuten n1 bis n24 des Ständerblechpaketes belegt. Fig. 3 zeigt das Wicklungsschema der in Fig. 1 ebenfalls in einer Prinzipschaltung dargestellten Erregerwicklung des im gleichen Ständerblechpaket angeordneten zweipoligen Universalmotorteils. Während die Wicklung des Induktionsmotors gleichmässig in sämtlichen Nuten n1 bis n24 verteilt angeordnet ist, belegt die Wicklung des Universalmotors – wie aus Fig. 3 ohne weiteres ersichtlich – lediglich einen Teil dieser Nuten. Die sowohl von der Induktionsmotor-Wicklung als auch von der Universalmotor-Wicklung belegten Nuten weisen einen grösseren Nutquerschnitt auf als die restlichen, allein von der Induktionsmotor-Wicklung belegten Nuten. Dadurch ergibt sich ein vorzugsweise rechteckiger Ständerblechschnitt mit ungleicher Nutgrösse, wobei die grösseren Nuten vorzugsweise im Bereich der Diagonalen des rechteckigen Ständerblechschnitts angeordnet sind.

Fig. 4 bis 6 zeigen drei Ausführungsbeispiele einer erfindungsgemäss ausgebildeten, achtpoligen Induktionsmotor-Läuferwicklung. Der Läufer weist dabei, abweichend von der aufgrund der Formel $N_2 = 2p \cdot m_2 \cdot q_2$ sich ergebenden Nutzahl, in den Ausführungsbeispielen nach Fig. 4 bis 6 achtzehn Nuten auf. Die Spulenweite $w_l$ entspricht, so genau wie aufgrund dieser Nutzahl möglich, der einfachen Polteilung einer achtpoligen Induktionsmotor-Wicklung. Im vorliegenden Fall würde der genaue Wert der Polteilung $\varphi_p = 45°$ geometrisch betragen; aufgrund der gewählten Nutzahl ergibt sich ein praktischer Wert der Spulenweite von $w_l = 40°$ geometrisch. Der räumliche Winkelabstand zwischen zwei aufeinanderfolgenden Spulen einer Spulengruppe beträgt, wie aus Fig. 4 ohne weiteres ersichtlich, 180° geometrisch.

In Fig. 4 sind von den achtzehn Nuten des Läuferblechpaketes insgesamt sechzehn Nuten mit je einer Spulenseite der Induktionsmotor-Wicklung belegt. Dies ist die maximal mögliche Belegungsquote, falls in jeder Nut nur jeweils eine Spulenseite anzuordnen ist und sämtliche Spulen das gleiche Kupfervolumen aufweisen sollen. Die in Fig. 4 dargestellte Induktionsmotor-Wicklung besteht aus vier Spulenpaaren mit je zwei in Reihe geschalteten Spulen, die den räumlichen Abstand von 180° zueinander aufweisen. Die Spulen eines jeden Spulenpaares sind durch einen ununterbrochenen Wicklungsdraht in Reihe geschaltete und durch Verbinden ihrer Wicklungsanfänge und Wicklungsenden in den Verbindungspunkten K1; K2; K3; K4 jeweils zu vier Kurzschlusskreisen zusammengeschaltet.

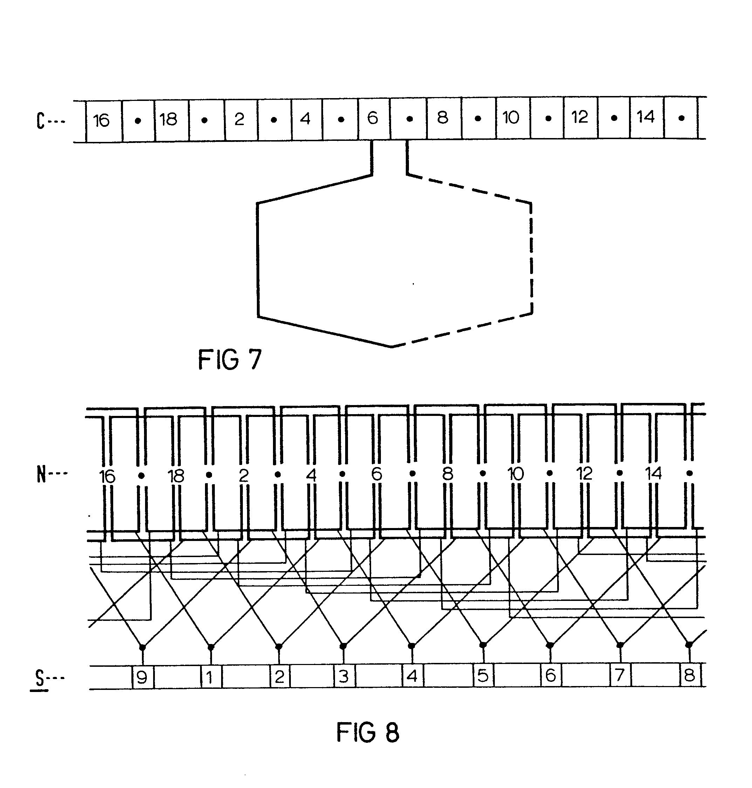

Die zusätzliche Kurzschlussverbindung zwischen den Verbindungspunkten der einzelnen Wicklungsanfänge und Wicklungsenden ist für die prinzipielle Funktion der erfindungsgemäss ausgelegten Wicklung ohne Einfluss. Die Kurzschlussverbindung wird in den Fig. 4, 5 in Form des Kurzschliessers K zwischen den einzelnen Verbindungspunkten K1 bis K4 bzw. K1 bis K5 dargestellt. Bei der Wicklung gemäss Fig. 6 sind der besseren Übersichtlichkeit wegen nicht die neun Wicklungsenden und die neun Wicklungsanfänge der einzelnen neun Spulenpaare je für sich verbunden, sondern einzeln zu dem als «Kurzschlussschiene» dargestellten Kurzschliesser K geführt. Fig. 6 deutet damit bereits die technische Vereinfachung durch den zusätzlichen Kurzschliesser K zwischen den Verbindungspunkten der Wicklungsenden und Wicklungsanfänge an, die in ihrer praktischen Ausführung in Fig. 8 anhand der gleichen Wicklung noch näher erläutert wird.

Fig. 8 zeigt eine fertigungstechnisch sehr zweckmässige und praktische Ausführung des Kurzschliessers in Form eines elektrisch leitenden Schaltrings S mit am Umfang verteilten und von der Induktionsmotor-Wicklung kontaktierten Schaltring-Haken S1 bis S9 in Fig. 8 dar. Fig. 7 zeigt die in den gleichen Nuten N1 bis N18 des Läuferpaketes angeordnete zweipolige Universalmotor-Wicklung, wobei von dieser Wicklung nur eine einzige, an die Lamellen C6, C7 des Kollektors C angeschlossene, Schleifenwicklung dargestellt ist.

Durch Anordnung des Schaltringes S an der Unterseite der in Fig. 8 dargestellten Induktionsmotor-Wicklung einerseits und des Kollektors C an der Oberseite der in Fig. 7 dargestellten Universalmotor-Wicklung soll angedeutet werden, dass insbesondere in für die maschinelle Fertigung der beiden Wicklungen vorteilhafter Weise Kollektor und Schaltring an gegenüberliegenden Strinseiten der Läuferwicklung anzuordnen sind.

Die in Fig. 8 dargestellte erfindungsgemässe achtpolige Induktionsmotor-Wicklung kann unter Zuhilfenahme des elektrisch leitenden und mit neun Haken versehenen Schaltringes wie folgt maschinell, z. B. mit Hilfe eines Flyers, auf einfache und betriebssichere Weise gefertigt werden: Der Anfang des ununterbrochenen Wicklungsdrahtes wird am Schaltring-Haken S3 kontaktiert und zur Nut N3 gezogen, die Spule N3, N1 wird gewickelt, der Wicklungsdraht wird ohne Kontaktierung des Schaltrings S im Sinne einer Reihenschaltung zur nächsten Spule der die Spule N1, N3 enthaltenden Spulengruppen, nämlich zur Nut N12 gezogen, die Spule N12, N10 wird gewickelt, der Spulendraht wird zum nächstfolgenden Schaltring-Haken S4 gezogen, um diesen eingelegt und zur Nut N5 gezogen, dann wird mit dem Wickeln der ersten Spule N5, N3 der nächstfolgenden Spulengruppen N5, N3; N14, N12 begonnen. Dieses Wicklungsverfahren wird fortgeführt, bis das Ende des Wicklungsdrahtes am Schaltring-Haken S3 wieder angelangt und die gesamte Wicklung mit neun Spulenpaaren ohne Unterbrechung des Wicklungsdrahtes verschaltet ist. Durch Heissverstemmen kann dann die elektrische Kontaktierung und endgültige mechanische Festlegung zwischen. den Schaltring-Haken und dem einliegenden Wicklungsdraht erfolgen.

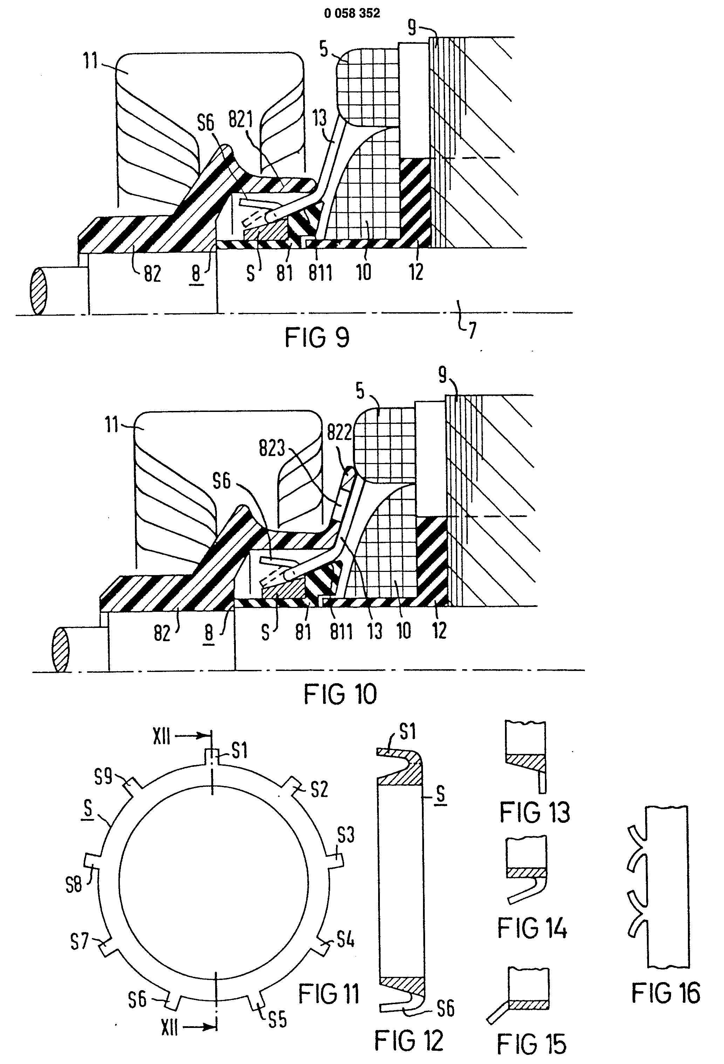

Die Fig. 9 und 10 zeigen jeweils in einem Längsschnitt zwei verschiedene Ausführungsformen des an der linken Stirnseite des Läufers in einer teilbaren Kassette 8 gekapselt gehaltenen Schaltrings S. In den Nuten des auf der Welle 7 angeordneten Läuferblechpaketes 9 ist radial innen zunächst die zweipolige Universalmotor-Wicklung 10 und radial aussen eine achtpolige Induktionsmotor-Wicklung angeordnet, deren über das Blechpaket axial hinausragender Wickelkopf das Bezugszeichen 5 trägt. Die Wicklungen sind gegenüber der Stirnseite des Läuferblechpaketes 9 und gegenüber der Welle 7 durch eine Isolierendscheibe 12 isoliert. Der in Fig. 11 in einer Draufsicht gezeigte Schaltring S besteht aus Elektrolytenkupfer und weist an seinem Umfang verteilt neun Schaltring-Haken S1 bis S9 auf. Diese Schaltring-Haken können entsprechend den verschiedenen Ausführungsformen nach Fig. 12 bis Fig. 16 entweder radial (Fig. 12 bis Fig. 14) oder axial (Fig. 15, 16) an den Schaltring S angeformt sein. Die Wahl der jeweiligen unterschiedlichen Schaltring-Hakenausführungen kann durch verschiedene Parameter, wie z. B. die Drahtdicke, die betriebliche mechanische Beanspruchung der Wicklung, die Drahtzugrichtung beim Bewickeln, die notwendige Kontaktfläche zwischen Schaltring-Haken und Draht usw. bestimmt sein.

Zur isolierten und mechanisch sicheren Halterung ist der Schaltring S z. B. auf den zuvor auf die Welle 7 aufgeschobenen ersten Kassettenteil 81 der teilbaren Kassette 8 aufgesteckt und im Presssitz gehalten. Anstelle dieser Presssitzhalterung zwischen innerem Kassettenteil 81 und Schaltring S könnte in fertigungstechnisch günstiger Weise auch vorgesehen werden, den Schaltring als vorzugsweise offenen Ring in den inneren Kassettenteil 81 eingebettet zu halten. Der innere Kassettenteil 81 besteht vorzugsweise aus einem mit Rücksicht auf den Heissverstemmvorgang temperaturfesten Material. An sich könnte der innere Kassettenteil 81 auch mit der Isolierendscheibe 12 einstückig integriert sein, jedoch würde in einem solchen Fall auch die Isolierendscheibe 12 eine erhöhte Temperaturfestigkeit und damit einen höheren Materialaufwand erfordern.

In Fig. 9, 10 ist in gestrichelter Form jeweils die Stellung des Schaltring-Hakens S6 nach dem Heissverstemmen gezeigt, bei dem durch Hitze der Isolierüberzug des Wicklungsdrahtes 13 entfernt und der Wicklungsdraht selbst mechanisch im Schaltring-Haken eindeutig festgelegt wird. In vorteilhafter Weise ist vorgesehen, dass die Verbindungen der Wicklungsanfänge und Wicklungsenden mit den Schaltring-Haken insgesamt und somit insbesondere die Aussenoberfläche der Schaltring-Haken frei von einem Isolierüberzug bleiben; dies bedeutet insbesondere, dass bei einer abschliessenden Giessharztränkung der Wickelköpfe keine Giessharzmasse zu den Schaltring-Haken gelangt. Auf diese Art und Weise kann z. B. ein Wicklungs-Prüfgerät von aussen an den Schaltring und an die Wicklung angeschlossen werden.

In vorteilhafter Weise ist weiterhin vorgesehen, dass der Schaltring S mit seinen Schaltring-Haken S1 bis S9 nach einem solchen Prüflauf dadurch isolierend und geschützt einkapselbar ist, dass abschliessend der zweite Kassettenteil 82 in Form einer zum Wickelkopf der Läuferwicklung offenen, den Schaltring in seiner Endposition nach aussen schützenden Abdeckglocke ausgebildet ist. Zweckmässigerweise kann diese Abdeckglocke gleichzeitig als Nabendom für einen gesondert oder einstückig mit dem zweiten Kassettenteil verbundenen Lüfter 11 vorgesehen werden. Die Glockenwandung des zweiten Kassettenteils 82 weist ausserdem ein axial auf den Wicklungsdraht 13 gerichtetes Andruckteil auf, das den ansonsten freien Wicklungsdraht 13 zwischen dem Wickelkopf 5 und dem Schaltring-Haken S6 fixiert; dazu ist als Gegenstück zum Andruckteil des zweiten Kassettenteils 82 eine entsprechende Anlegeschulter 811 am ersten Kassettenteil 81 angeformt. In Fig. 9 ist das Andruckteil des zweiten Kassettenteils 82 als axial gerichtete Andrucknase 821, in Fig. 10 als zusätzlich hochgezogene, den Wicklungsdraht 13 über einen grösseren Bereich abstützender und mit Lüftungsöffnungen 823 versehener Andruckteller 822 ausgebildet.

Abschliessend seien kurz die wesentlichen Schritte zur Herstellung der erfindungsgemäss ausgelegten Wicklung noch einem zusammenfassend dargestellt; aus dieser Darstellung ergibt sich, wie einfach diese Wicklung trotz der weitgehend freien Verfügbarkeit über unterschiedliche Nutzahlverhältnisse im Läufer im Gegensatz zu vergleichbaren bekannten Lösungen zu fertigen ist.

a) In die Nuten des mit Isolierendscheibe sowie Nutauskleidungen versehenen, auf die Welle aufgepressten Läuferblechpaketes wird die Universalmotor-Wicklung eingewickelt und mit den Kommutatorhaken kontaktiert.

b) An der dem Kommutator abgewandten Stirnseite des Läuferblechpaketes wird der innere Kassettenteil auf die Welle aufgesteckt und ein Schaltring vorzugsweise mit zumindest einer der Spulenpaarzahl entsprechenden Hakenzahl auf dem inneren Kassettenteil gehalten.

c) Die Induktionsmotor-Wicklung wird beginnend von einem ersten Schaltring-Haken maschinell mit einem ununterbrochenen Wicklungsdraht eingewickelt, wobei zur Reihenschaltung der einer Spulengruppe angehörenden Spulen ohne Kontaktierung der Schaltringhaken um den räumlichen Winkelabstand zwischen zwei aufeinanderfolgenden Spulen am Läuferumfang fortgeschritten und zwischen Wicklungsende einer Spulengruppe und Wicklungsanfang der nächsten Spulengruppe der durchgehende Wicklungsdraht um einen, vorzugsweise in der Mitte zwischen Wicklungsende und Wicklungsanfang angeordneten, Schaltringhaken umschlungen wird.

d) Durch Heissverstemmen werden im Bereich der Schaltringhaken die Isolierung von den kontaktierenden Wicklungsdrähten abgetragen und die Wicklungsdrähte in diesem Bereich zwischen Schaltring und Schaltringhaken festgelegt.

e) Nach weiterer Komplettierung des Läufers, insbesondere nach Anbringung der Nutenverschlusskeile, einem Vorwuchten und einem Harzisolieren der Wickelköpfe wird der Läufer elektrisch überprüft; dazu kann in vorteilhafter Weise ein elektrisches Wicklungs-Prüfgerät an die frei zugänglichen Schaltringhaken und die damit verbundenen Wicklungsenden angeschlossen werden.

f) Das äussere Kassettenteil wird zusammen mit dem Lüfterrad axial aufgeschoben, kapselt dabei den Schaltring geschützt und isoliert ein und fixiert die freien Wicklungsdrähte zwischen Schaltring und Wickelkopf, insbesondere im Sinne einer hohen Fliehkraftfestigkeit.

**Patentansprüche**

1. Wicklung für einen elektrischen Motor, insbesondere für einen Waschautomaten, mit in einem gemeinsamen Ständerblechpaket in Nuten angeordneter Ständerwicklung eines Universalmotors der Polpaarzahl $P_U = 1$ einerseits und eines Induktionsmotors der Polpaarzahl $P_I \geqq 2$ andererseits und mit einem gemeinsamen Läufer, dessen in Nuten angeordnete Wicklung wie folgt ausgeführt ist:

Sie besteht:

a) aus Stromkreisen mit einer jener des erregenden Induktionsmotors-Ständerfeldes entsprechenden Polzahl, wobei diese Stromkreise zumindest zwei Spulengruppen mit jeweils zu einem Kurzschlusskreis in Reihe geschalteten Spulen gleicher Spulenwindungszahl aufweisen, und

b) aus mit den Lamellen eines Kommutators verbundenen Stromkreisen mit einer jener des erregenden Universalmotor-Ständerfeldes entsprechenden Polzahl und wobei die Gesamtnutzahl des Läufers unterschiedlich von der aufgrund von Polzahl, Phasenzahl und Nutenzahl pro Pol und Strang für eine Ganzlochwicklung nach der Formel: $N_2 = 2p \cdot m_2 \cdot q_2$ bestimmbaren Nutzahl ist, gekennzeichnet durch die Merkmale:

c) die Spulenweite $w_i$ einer Spule jeder Spulengruppe entspricht, so genau wie aufgrund der Nutteilung möglich, der einfachen Polteilung der Induktionsmotor-Wicklung,

d) die Zahl $n_2$ der Spulen je Spulengruppe beträgt:

$$n_2 = \frac{P_I}{k} \text{ mit } k = 1, 2, 3 \ldots,$$

e) der räumliche Winkelabstand zwischen zwei aufeinanderfolgenden Spulen einer Spulengruppe beträgt:

$$\alpha = \frac{360°}{n_2},$$

f) Universalmotor-Wicklung und Induktionsmotorwicklung sind voneinander galvanisch völlig getrennt,

g) nacheinander von einer Wickelvorrichtung zu wickelnde Spulengruppen sind fortlaufend mit einem ununterbrochenen Wicklungsdraht gewickelt, der beim Übergang vom Wicklungsende der einen zum Wicklungsanfang der anderen Spulengruppe einen Kurzschliesser (K) kontaktiert, der sämtliche Wicklungsenden bzw. Wicklungsanfänge untereinander verbindet.

2. Wicklung nach Anspruch 1, dadurch gekennzeichnet, dass in jeder Nut einer mit einer Spule der Induktionsmotor-Wicklung belegten Nut nur eine einzige Spulenseite der Induktionsmotor-Wicklung angeordnet ist (Fig. 4).

3. Wicklung nach Anspruch 1 oder 2, dadurch gekennzeichnet, dass sämtliche Nuten mit Spulenseiten der Induktionsmotor-Wicklung belegt sind, wobei in einem Teil der Nuten jeweils nur eine Spulenseite und in dem anderen Teil der Nuten je Nut zwei Spulenseiten angeordnet sind, deren gesamtes Kupfervolumen pro Nut dem Kupfervolumen einer nur mit einer Spulenseite belegten Nut entspricht (Fig. 5).

4. Wicklung nach Anspruch 1, dadurch gekennzeichnet, dass sämtliche Nuten gleichartig mit mehreren Spulenseiten pro Nut belegt sind (Fig. 6).

5. Wicklung nach Anspruch 2, dadurch gekennzeichnet, dass bei einem Läufer mit insgesamt $N_2 = 18$ Nuten und einer Polzahl $2p_I = 8$ vier Spulenpaare vorgesehen und sechzehn Nuten mit je einer Spulenseite dieser Spulenpaare belegt und zwei räumlich am Bohrungsumfang gegenüberliegende Nuten frei von der Induktionsmotor-Wicklung sind (Fig. 4).

6. Wicklung nach Anspruch 3, dadurch gekennzeichnet, dass bei einem Läufer mit insgesamt $N_2 = 18$ Nuten und einer Polzahl $2p_I = 8$ insgesamt fünf Spulenpaare vorgesehen und sechzehn Nuten mit je einer Spulenseite und zwei räumlich am Bohrungsumfang gegenüberliegende Nuten mit je zwei Spulenseiten der Induktionsmotor-Wicklung belegt sind (Fig. 5).

7. Wicklung nach Anspruch 4, dadurch gekennzeichnet, dass bei einem Läufer mit insgesamt $N_2 = 18$ Nuten und einer Polzahl $2p_I = 8$ sämtliche Nuten mit je zwei Spulenseiten der Induktionsmotor-Wicklung belegt sind (Fig. 6).

8. Wicklung nach einem der Ansprüche 1 bis 7, dadurch gekennzeichnet, dass als Kurzschliesser (K) vor demjenigen Wickelkopf (5) der Induktionsmotorwicklung, der dem allein mit dem Universalmotorwicklung (10) verbundenen Kollektor (C) abgewandt ist, ein aus elektrisch leitfähigem Material bestehender Ring (Schaltring S) konzentrisch zur Welle (7) des Läufers angeordnet ist, der auf seinem Umfang verteilt eine mindestens der Anzahl der herzustellenden Verbindungen entsprechende Anzahl von ebenfalls elektrisch leitfähigen, hakenförmigen Ansätzen (Schaltringhaken S1–S9) trägt, und dass die Wicklungsanfänge und Wicklungsenden der von demselben Wickler nacheinander gewickelten Spulengruppen ununterbrochen unter Zwischenkontaktierung eines Schaltringhakens jeweils durchgewickelt sind.

9. Wicklung nach Anspruch 8, dadurch gekennzeichnet, dass die Anzahl der Schaltringhaken (S1; S2; S3...) zumindest gleich der Anzahl der Spulenpaare der Induktionsmotorwicklung ist.

10. Wicklung nach einem der Ansprüche 8 oder 9, dadurch gekennzeichnet, dass die Verbindungsstellen der Wicklungsanfänge und Wicklungsenden mit den Schaltringhaken insoweit frei von einem Isolierüberzug sind, dass von aussen ein elektrisches Wicklungs-Prüfgerät anschliessbar ist.

11. Wicklung nach einem der Ansprüche 8 bis 10, dadurch gekennzeichnet, dass der Schaltring in einer zweiteiligen isolierenden Kassette (8) einkapselbar ist, deren erster, zunächst axial über die Welle (7) schiebbarer Kassettenteil (81) als Träger für den ihn konzentrisch umgebenden Schaltring (S) und deren zweiter, abschliessend über die Welle (7) des Läufers schiebbarer Kassettenteil (82) in Form einer zum Wickelkopf offenen, den Schaltring (S) nach aussen schützenden Abdeckglocke ausgebildet wird.

## Claims

1. Winding for an electric motor, especially for an automatic washing machine, with a stator winding in a common laminated stator core and arranged in slots, on the one hand of a universal motor with pole pair number $P_U = 1$, and on the other hand of an induction motor with pole pair number $P_I \geqslant 2$ and with a common rotor, of which the winding, arranged in slots, is designed as follows:

It consists:

a) of electric circuits with a pole number which corresponds to that of the energising induction motor stator field, these electric circuits having at least two coil groups with coils of the same coil turn number, connected in each case in series to a shorted circuit, and

b) of electric circuits connected to the segments of a commutator and with a pole number which corresponds to that of the energising universal motor stator field and in which the total slot number of the rotor is different from the slot number determined on the basis of pole number, phase number and number of slots per pole and phase for one integral slot-winding according to the formula: $N_2 = 2p \cdot m_2 \cdot q_2$, characterised by the features:

c) the coil width $w_I$ of one coil of every coil group corresponds, as precisely as made possible by the slot distribution, to the simple pole distribution of the induction motor winding,

d) the number $n_2$ of the coils per coil group totals:

$$n_2 = \frac{P_I}{k} \text{ with } k = 1, 2, 3...,$$

e) the spatial angular distance between two consecutive coils of a coil group amounts to:

$$\alpha = \frac{360°}{n_2},$$

f) universal motor winding and induction motor winding are completely electrically isolated from each other,

g) winding coil groups to be wound successively by a winding mechanism are wound continuously with a continuous wire, which, at the transition from the winding end of one coil group to the winding beginning of the other, contacts a short-circuiter which connects all the winding ends/winding beginnings.

2. Winding according to claim 1, characterised in that there is only a single coil side of the induction motor winding arranged in each slot of a slot which is occupied by a coil of the induction motor winding.

3. Winding according to claim 1 or 2, characterised in that all the slots are occupied by coil sides of the induction motor, wherein in one part of the slots in each case only one coil side is arranged and in the other part of the slots two coil sides are arranged per slot, the total volume of copper per slot of the coil sides corresponding to the volume of copper of a slot which is only occupied by one coil side (Fig. 5).

4. Winding according to claim 1, characterised in that all the slots are similarly occupied by several coil sides per slot (Fig. 6).

5. Winding according to claim 2, characterised in that in a rotor with a total of $N_2 = 18$ slots and a pole number $2p_I = 8$, four coil pairs are provided and sixteen slots are each occupied by one coil side of these coil pairs, and two spatially opposed slots at the perimeter of the bore are free of the induction motor winding (Fig. 4).

6. Winding according to claim 3, characterised in that in a rotor with a total of $N_2 = 18$ slots and a pole number $2p_I = 8$, five coil pairs in total are provided and sixteen slots are each occupied by one coil side and two spatially opposed slots at the perimeter of the bore are each occupied by two coil sides of the induction motor winding.

7. Winding according to claim 4, characterised in that in a rotor with a total of $N_2 = 18$ slots and a pole number $2p_I = 8$, all the slots are each occupied by two coil sides of the induction motor winding.

8. Winding according to one of the claims 1–7, characterised in that as a short-circuiter (K) before the winding overhang (5) of the induction motor winding facing away from the collector (C), which is connected solely with the universal motor winding, a ring (connector ring S) consisting of electrically conductive material is arranged concentrically to the shaft (7) of the rotor, which holds distributed on its perimeter a number of likewise conductive hook-shaped projections (connector hooks S1–S9), this number corresponding at least to the number of the connections to be made, and that the winding beginnings and winding ends of the coil groups, which are wound successively from the same winder, are respectively wound through uninterruptedly with intermediate contacting of a connector ring hook.

9. Winding according to claim 8, characterised in that the number of connector ring hooks (S1; S2; S3...) is at least equal to the number of coil pairs of the induction motor winding.

10. Winding according to one of the claims 8 or 9, characterised in that the connecting points of the winding beginnings and winding ends to the connector ring hooks are sufficiently free from an insulating coating for an electrical winding testing apparatus to be connected externally.

11. Winding according to one of the claims 8–10, characterised in that the connector ring can be encapsulated in a two-part insulating cassette (8), whose first cassette part (81), which may first be moved axially over the shaft (7), is designed as a holder for the connector ring (S) which concentrically surrounds it, and whose second cassette part (82), which as a final step is moveable over the shaft (7) of the rotor, is designed in the form of a covering bell, which is open towards the winding overhang and protects the connector ring (S) from the outside.

**Revendications**

1. Enroulement pour un moteur électrique, notamment pour une machine automatique à laver le linge, comportant un enroulement statorique, disposé à l'intérieur d'encoches dans un paquet commun de tôles statoriques, d'un moteur universel possédant le nombre $P_U = 1$ de couples de pôles d'une part et d'un moteur à induction possédant le nombre de couples de pôles $P_I \geq 2$ d'autre part, et un rotor commun, dont l'enroulement, disposé dans des encoches, est agencé comme suit:

il est constitué par

a) des circuits possédant un nombre de pôles correspondant à celui du champ d'excitation statorique du moteur à induction, ces circuits comportant au moins deux groupes de bobines comportant des bobines possédant le même nombre de spires et branchées chacune en série avec un circuit de court-circuit, et

b) des circuits qui sont reliés aux lamelles d'un collecteur et comportent un nombre de pôles correspondant à celui du champ d'excitation statorique du moteur universel, et dans lequel le nombre total d'encoches du rotor est différent du nombre d'encoches pouvant être déterminé sur la base du nombre de pôles, du nombre de phases et du nombre d'encoches pour chaque pôle et chaque phase pour un enroulement à nombre entier d'encoches par pôle et par phase, conformément à la formule: $N_2 = 2p \cdot m_2 \cdot q_2$, caractérisé par les caractéristiques:

c) la largeur $w_I$ d'une bobine de chaque groupe de bobines correspond, d'une manière aussi précise que cela est possible sur la base du pas des encoches, au pas simple des pôles de l'enroulement du moteur à induction,

d) le nombre $n_2$ des bobines dans chaque groupe de bobines est égal à

$$n_2 = \frac{P_I}{k} \text{ avec } k = 1, 2, 3...,$$

e) la distance angulaire spatiale entre deux bobines successives d'un groupe de bobines est égale à 2:

$$\alpha = \frac{360°}{n_2},$$

f) l'enroulement du moteur universel et l'enroulement du moteur à induction sont entièrement séparés galvaniquement l'un de l'autre,

g) des groupes de bobines, qui doivent être bobinés successivement par un dispositif de bobinage, sont bobinés de façon continue au moyen d'un fil d'enroulement ininterrompu qui, lors du passage de la fin de l'enroulement d'un groupe de bobines au début de l'enroulement de l'autre groupe de bobines, est en contact avec un dispositif de mise en court-circuit (K), qui relie entre eux toutes les fins ou tous les débuts des enroulements.

2. Enroulement suivant la revendication 1, caractérisé par le fait qu'un seul côté de bobine de l'enroulement du moteur à induction est disposé dans une encoche occupée par une bobine de l'enroulement du moteur à induction (figure 4).

3. Enroulement suivant la revendication 1 ou 2, caractérisé par le fait que toutes les encoches sont occupées par des côtés de bobines de l'enroulement du moteur à induction, auquel cas dans une partie des encoches se trouve disposé respectivement seul un côté de bobine et dans l'autre partie des encoches se trouvent disposés, pour chaque encoche, deux côtés de bobine, dont le volume global de cuivre pour chaque encoche correspond au volume de cuivre d'une encoche occupée uniquement par un côté de bobine (figure 5).

4. Enroulement suivant la revendication 1, caractérisé par le fait que toutes les encoches sont occupées de la même manière par plusieurs côtés de bobines pour chaque encoche (figure 6).

5. Enroulement suivant la revendication 2, caractérisé par le fait que dans le cas d'un rotor possédant au total $N_2 = 18$ encoches et un nombre de pôles $2p_l = 8$, il est prévu quatre couples de bobines, que seize encoches sont occupées par un côté de bobine respectif de ces couples de bobines et que deux encoches situées en vis-à-vis dans l'espace au niveau du pourtour du perçage ne logent pas l'enroulement du moteur à induction (figure 4).

6. Enroulement suivant la revendication 3, caractérisé par le fait que dans le cas d'un rotor comportant au total $N_2 = 18$ encoches et un nombre de pôle $2p_l = 8$, il est prévu au total cinq couples de bobines, que seize encoches sont occupées par un côté de bobine respectif et deux encoches situées en vis-à-vis dans l'espace au niveau du pourtour du perçage sont occupées par deux côtés de bobines respectives de l'enroulement du moteur à induction (figure 5).

7. Enroulement suivant la revendication 4, caractérisé par le fait que dans le cas d'un rotor comportant au total $N_2 = 18$ encoches et un nombre de pôles $2p_l = 8$, toutes les encoches sont occupées par deux côtés de bobines respectifs de l'enroulement du moteur à induction (figure 6).

8. Enroulement suivant l'une des revendications 1 à 7, caractérisé par le fait qu'à titre de dispositif de mise en court-circuit (K) se trouve disposé, concentriquement à l'arbre (7) du rotor, et ce en amont de la tête (5) de l'enroulement du moteur à induction, qui est tournée à l'opposé du collecteur (C) relié à l'enroulement (10) du moteur universel, un anneau réalisé en un matériau électriquement conducteur (anneau de commutation S), qui porte un nombre, qui correspond au moins au nombre des liaisons devant être établies, de parties saillantes en forme de crochets, également électriquement conductrices (crochets de l'anneau de commutation (S1–S9), qui sont réparties sur le pourtour de la bague, et que les débuts et les extrémités des enroulements des groupes de bobines bobinés successivement par le même dispositif d'enroulement, sont bobinés entièrement, sans interruption, moyennant l'établissement d'un contact intermédiaire avec un crochet de l'anneau de commutation.

9. Enroulement suivant la revendication 8, caractérisé par le fait que le nombre des crochets (S1; S2; S3...) de l'anneau de commutation est égal au moins au nombre des couples de bobines de l'enroulement du moteur à induction.

10. Enroulement suivant l'une des revendications 8 ou 9, caractérisé par le fait que les points de jonction des débuts et des extrémités des enroulements avec les crochets de l'anneau de commutation sont exempts d'un revêtement isolant de sorte qu'un appareil électrique de contrôle de l'enroulement peut être raccordé à partir de l'extérieur.

11. Enroulement suivant l'une des revendications 8 à 10, caractérisé par le fait que la bague de commutation peut être encapsulée dans une cassette isolante (8) constituée de deux éléments, parmi lesquels le premier élément de cassette (80), qui peut être repoussé tout d'abord axialement sur l'arbre (7), est réalisé sous la forme d'un support pour l'anneau de commutation (S) qui l'entoure concentriquement, tandis que le second élément de cassette (82), qui peut être repoussé en dernier sur l'arbre (7) du rotor, est réalisé sous la forme d'une cloche de revêtement ouverte en direction de la tête de l'enroulement et protégeant l'anneau de commutation (S) en direction de l'extérieur.

0 058 352

FIG 1

FIG 2

FIG 3

9

FIG 4

FIG 5

FIG 6

C··· | 16 | • | 18 | • | 2 | • | 4 | • | 6 | • | 8 | • | 10 | • | 12 | • | 14 | •

FIG 7

N··· 16 • 18 • 2 • 4 • 6 • 8 • 10 • 12 • 14 •

S··· | 9 | 1 | 2 | 3 | 4 | 5 | 6 | 7 | 8

FIG 8

0 058 352

FIG 9

FIG 10

FIG 11

FIG 12

FIG 13

FIG 14

FIG 15

FIG 16

15